# EUROPÄISCHE PATENTSCHRIFT

(11) **EP 0 756 920 B1**
(45) Veröffentlichungstag und Bekanntmachung des Hinweises auf die Patenterteilung: **18.10.2000**
(21) Anmeldenummer: 96112297.5
(22) Anmeldetag: 30.07.1996
(51) Int. Cl.: B27F 5/02, B23D 47/08, B23Q 9/00, B23Q 5/38

(54) **Vorrichtung zum Fräsen von Nuten, Schattenfugen oder dergleichen**
Apparatus for milling grooves
Dispositif pour fraiser des rainures

(30) Priorität: 03.08.1995 DE 19528494
(43) Veröffentlichungstag der Anmeldung: 05.02.1997
(73) Patentinhaber: Klapperich, Leo, D-56653 Wehr (DE)
(72) Erfinder: Klapperich, Leo, D-56653 Wehr (DE)
(74) Vertreter: Kossobutzki, Walter, Dipl.-Ing.(FH)

(56) Entgegenhaltungen:
- EP-A- 0 062 253
- DE-A- 2 547 459
- FR-A- 2 682 314
- FINE WOODWORKING, Nr. 110, 1.Januar 1995, Seiten 52-57, XP000490695 ROBINSON C: "PICKING A PLATE JOINER A SURVEY OF THE LATEST OFFERINGS IN THIS VERSATILE JOINERY SYSTEM"

## Beschreibung

Die Erfindung bezieht sich auf eine Vorrichtung zum Fräsen von Nuten, Schattenfugen oder dgl. mittels einer Frässcheibe bestehend aus einer Frässcheibe, einem aus einem gehäuseartigen Grundkörper mit einer Stirnplatte mit einer Austrittsöffnung für die Frässcheibe gebildeten Anschlagwinkel und einem in dem Grundkörper in Richtung auf die Stirnplatte verschiebbar geführten, durch Federkraft rückstellbaren Lagerkörper für eine die Frässcheibe aufnehmende und einen Anschlußzapfen für eine Antriebseinheit aufweisende Kupplungswelle.

Aus der veröffentlichten europäischen Patentanmeldung 0 298 221 ist eine Vorrichtung zum Fräsen von Nuten oder Schattenfugen bekannt, die aus einem aus Grundplatte und Stirnplatte gebildeten Anschlagwinkel besteht. Auf dem Anschlagwinkel sind Führungen vorgesehen, die parallel zur Grundplatte in Richtung auf die Stirnplatte verlaufen. Auf diesen Führungen ist ein Schlitten verschiebbar angeordnet, der einen Lagerkörper für eine Kupplungswelle trägt. An ihrem unteren Ende nimmt die Kupplungswelle eine Frässcheibe auf, während das obere Ende der Kupplungswelle mit einem ein Winkelgetriebe aufweisenden Antriebsmotor verbindbar ist. Bei dieser bekannten Vorrichtung wird der Schlitten über Federn in einer Grund- bzw. Ausgangslage gehalten, in der die Frässcheibe nicht aus der Stirnplatte des Anschlagwinkels herausragt. Über den Antriebsmotor wird nun der Anschlagwinkel in eine Arbeitslage gebracht, in der durch entsprechende Bewegung des Schlittens über den Antriebsmotor die Frässcheibe aus der Stirnplatte hervortritt und die Nut erzeugt. Dabei wird bei der Arbeitsbewegung der Frässcheibe der Anschlagwinkel ausschließlich über die Kraft der Federn in der Arbeitsposition gehalten. Dies bedeutet, daß die Haltekraft für den Anschlagwinkel ausschließlich über die Federn aus der Vorschubbewegung der Frässcheibe abgeleitet wird. Die Anpreßkraft des Anschlagwinkels kann daher, insbesondere in Abhängigkeit von der Gegenfläche des Anschlagwinkels, nicht beeinflußt werden. Eine Veränderung der Anpreßkraft ist grundsätzlich nicht möglich. Stärkere Federn benötigen einen größeren Einbauplatz, der nicht zur Verfügung steht, und führen dazu, daß sich dadurch zwangsläufig die Kraft für die Vorschubbewegung der Frässcheibe erhöht.

Aus der europäischen Patentanmeldung 062 253 (nächstliegender Stand der Technik) ist eine Vorrichtung zum Fräsen von Nuten, Schattenfugen oder dgl. mittels einer Frässcheibe bekannt, die eine Art Anschlagwinkel aufweist, der seinerseits aus einem gehäuseartigen Grundkörper und einer Stirnplatte besteht. In der Stirnplatte befindet sich eine Austrittsöffnung für eine Frässcheibe, die auf einer Welle befestigt ist. Die Welle wird von einem Lagerkörper aufgenommen, der in Richtung auf die Stirnplatte verschwenkbar und durch Federkraft rückstellbar ist. Die die Frässcheibe tragende Welle besitzt ein Zahnrad, welches mit einem Zahnrad kämmt, das seinerseits auf der Antriebswelle einer Antriebseinheit befestigt ist. Die die Frässcheibe tragende Welle ist nun um die Antriebswelle der Antriebseinheit schwenkbar und damit entlang einer Kurve bewegbar. Durch diese Bewegung wird die Frässcheibe angestellt bzw. aus dem gehäuseartigen Grundkörper herausbewegt.

Um eine Linearvestellung und eine Drehbewegung des ganzen Lagerkörpers zu gewährleisten wird gemäß der Erfindung bei einer Vorrichtung der eingangs beschriebenen Gattung vorgeschlagen, daß der Lagerkörper einen sich auf einer Kreislinie über einen Winkel von mindestens 60° erstreckenden Verzahnungssektor aufweist, der Grundkörper eine mit dem Verzahnungssektor zusammenwirkende Linearverzahnung besitzt und der Lagerkörper durch Drehung entlang der Linearverzahnung in Richtung der Stirnplatte bewegbar und damit die Frässcheibe anstellbar ist.

Bei einer solchen Ausgestaltung kann nach wie vor an handelsüblichen Antriebseinheiten, beispielsweise Bohrmaschinen, angeschlossen werden.

Weitere Merkmale einer Vorrichtung gemäß der Erfindung sind in den Ansprüchen 2-5 offenbart.

Die Erfindung wird nachfolgend anhand eines in einer Zeichnung dargestellten Ausführungsbeispieles näher erläutert. Dabei zeigen
- Fig. 1: eine perspektivische Darstellung einer Vorrichtung gemäß der Erfindung
- Fig. 2: eine Draufsicht auf die Vorrichtung der Fig. 1
- Fig. 3: eine Seitenansicht der Vorrichtung der Fig. 1.

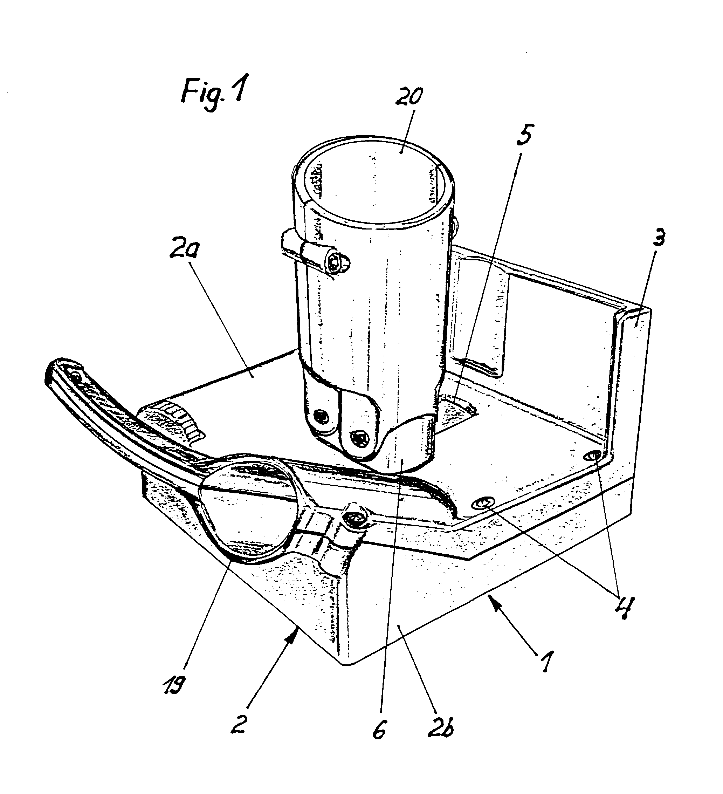

In den Fign. 1-3 der Zeichnung ist eine Vorrichtung gezeigt, die zum Fräsen von Nuten, Schattenfugen oder dgl. dient. Diese Vorrichtung besteht aus einem Anschlagwinkel 1, der aus einem Grundkörper 2 und einer Stirnplatte 3 gebildet ist. Der Grundkörper 2 ist im dargestellten Ausführungsbeispiel als Gehäuse ausgebildet, welches aus einem Oberteil 2a und einem Unterteil 2b mittels Schrauben 4 zusammengesetzt ist. Dabei sind das Oberteil 2a und das Unterteil 2b in vorteilhafter Weise aus Kunststoff gefertigt. Die Stirnplatte 3 bildet im dargestellten Ausführungsbeispiel ein Stück mit dem Oberteil 2a des Grundkörpers 2.

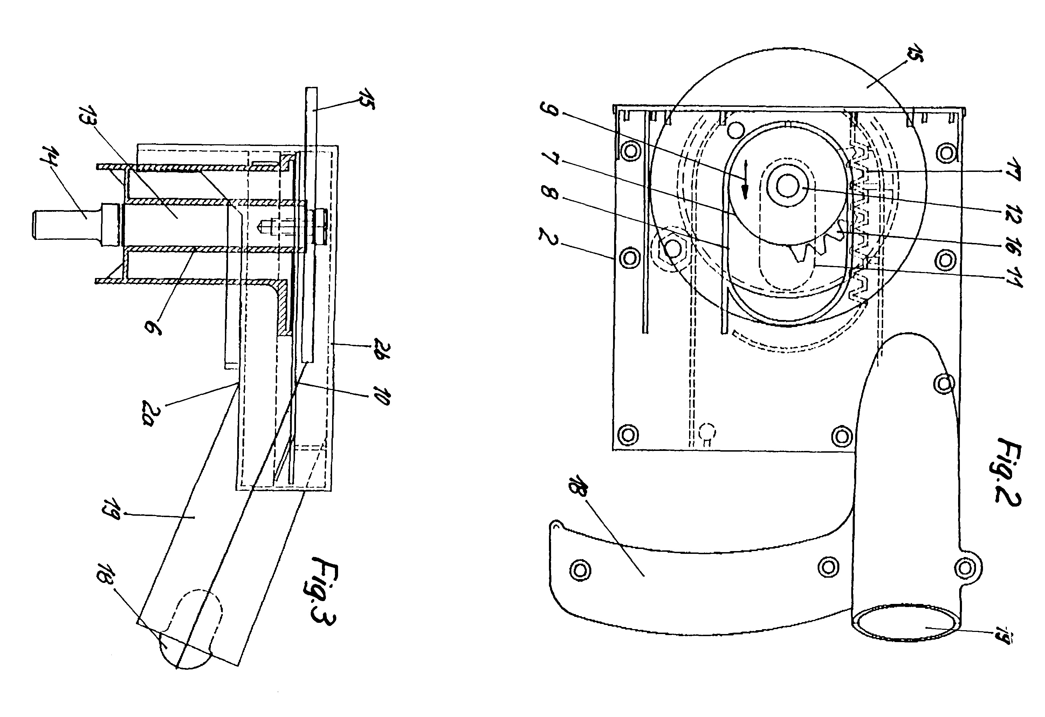

Im Oberteil des Grundkörpers 2a ist eine nutartige Aussparung 5 vorgesehen, durch die ein Lagerkörper 6 in das Innere des gehäuseartigen Grundkörpers 2 ragt. In diesem Bereich ist der Lagerkörper 6 mit einer ringförmigen Führungsfläche 7 versehen, die mit einer nutartigen Führung 8 im Inneren des gehäuseartigen Grundkörpers zusammenwirkt und dort ein Verschieben des Lagerkörpers 6 in Richtung des Pfeiles 9 und zurück ermöglicht. Der Lagerkörper 6 stützt sich im Inneren des gehäuseartigen Grundkörpers auf einer aus Metall gebildeten Gleitfläche 10 ab, die am Unterteil 2b des Grundkörpers 2 ausgebildet ist. In dieser Gleitfläche 10 ist eine Nut 11 vorgesehen, durch die ein Zapfen 12 des Lagerkörpers 6 ragt. Der Lagerkörper 6 ist hohl ausgebildet und nimmt eine Kupplungswelle 13 auf, die an ihrem äußeren Ende mit einem Anschlußzapfen 14 für eine Antriebseinheit versehen ist. An dem im Grundkörper 2 bzw. im Unterteil 2b des Grundkörpers 2 befindlichen Ende nimmt die Kupplungswelle 13 eine an sich bekannte Frässcheibe 15 auf, die in den Fign. 2 und 3 der Zeichnung in ihrer ausgefahrenen Stellung gezeichnet ist. Der Grundkörper 2 weist im Bereich der Stirnplatte 3 einen entsprechenden, in der Zeichnung nicht erkennbaren Schlitz auf, durch den die Frässcheibe 15 nach außen bewegt werden kann.

Der Lagerkörper 6 ist oberhalb oder unterhalb der ringförmigen Führungsfläche 7 mit einem Verzahnungssektor 16 versehen, der aus einer auf einer Kreislinie verlaufenden Verzahnung besteht. Dieser Verzahnungssektor 16 erstreckt sich über mindestens einen Winkel von 60°, im dargestellten Ausführungsbeispiel über einen Winkel von gut 90°. Die Zähne des Verzahnungssektors 16 wirken mit einer Linearverzahnung 17 zusammen, die im gehäuseartigen Grundkörper 2 ausgebildet ist. Der Verzahnungssektor 16 und die Linearverzahnung 17 bewirken, daß dann, wenn der Lagerkörper 6 entgegen dem Uhrzeigersinn verdreht wird, sich der Lagerkörper 6 in Richtung des Pfeiles 9 und umgekehrt verschiebt. Die Frässcheibe 15 führt dabei die gleiche Bewegung aus. Dem Lagerkörper 6 ist innerhalb des gehäuseartigen Grundkörpers 2 eine vorgespannte Zugfeder zugeordnet, die sicherstellt, daß der Lagerkörper 6 innerhalb der nutartigen Führung 8 immer eine solche Endlage bzw. Grundstellung einnimmt, die der gezeichneten Stellung gegenüberliegt und in der sich die Frässcheibe 15 innerhalb des gehäuseartigen Grundkörpers 2 befindet.

Der äußere Bereich des Lagerkörpers 6 ist nun, wie die Fig. 1 erkennen läßt, als geteilte und zusammenklappbare Hülse 20 ausgebildet und dient als Anschlußteil für den Führungszapfen einer Bohrmaschine, der von demselben spannend aufgenommen wird. Dabei ist das Bohrfutter der Bohrmaschine mit dem Anschlußzapfen 14 verspannt. Über den an sich bekannten Handgriff der Bohrmaschine kann nun der Lagerzapfen 6 gedreht und damit über den Verzahnungssektor 16 und die Linearverzahnung 17 die Vorschubbewegung der Frässcheibe 15 ausgeführt werden.

Das eigentliche Anlegen bzw. Anpressen der Vorrichtung an die Bearbeitungsfläche erfolgt über einen Handgriff 18. Die Anpreß- bzw. Haltekraft für die Vorrichtung an der Bearbeitungsfläche ist dabei unabhängig von der Vorschubbewegung und damit der Vorschubkraft der Frässcheibe 15.

Im dargestellten Ausführungsbeispiel wird durch das Oberteil 2a und durch das Unterteil 2b des gehäuseartigen Grundkörpers 2 ein Absaugstutzen 19 gebildet, an den eine schlauchartige Absaugleitung angeschlossen werden kann. Dies ermöglicht ein problemloses Entfernen der beim Fräsvorgang entstehenden Späne.

In Abänderung des erläuterten Ausführungsbeispieles ist es möglich, die Stirnplatte 3 des Anschlagwinkels 1 schwenkbar und in ihrer Schwenklage feststellbar auszugestalten, so daß auch unter einem Winkel verlaufende Nuten hergestellt werden können. Bedarfsweise kann die Stirnplatte 3 mit einem Aufsteckteil zur Herstellung von Schattenfugen versehen sein.

## Patentansprüche

1. Vorrichtung zum Fräsen von Nuten, Schattenfugen oder dgl. mittels einer Frässcheibe (15), bestehend aus einer Frässcheibe, einem aus einem gehäuseartigen Grundkörper (2) mit einer Stirnplatte (3) mit einer Austrittsöffnung für die Frässcheibe (15) gebildeten Anschlagwinkel (1) und einem in dem Grundkörper (2) in Richtung auf die Stirnplatte (3) verschiebbar geführten, durch Federkraft rückstellbaren Lagerkörper (6) für eine die Frässcheibe (15) aufnehmende und einen Anschlußzapfen (14) für eine Antriebseinheit aufweisende Kupplungswelle (13),
dadurch gekennzeichnet,
daß der Lagerkörper (6) einen sich auf einer Kreislinie über einen Winkel von mindestens 60° erstreckenden Verzahnungssektor (16) aufweist, der Grundkörper (2) eine mit dem Verzahnungssektor (16) zusammenwirkende Linearverzahnung (17) besitzt und der Lagerkörper (6) durch Drehung entlang der Linearverzahnung (17) in Richtung der Stirnplatte (3) bewegbar und damit die Frässcheibe (15) anstellbar ist.

2. Vorrichtung nach Anspruch 1,
dadurch gekennzeichnet,
daß der Lagerkörper (6) eine ringförmige Führungsfläche (7) aufweist und in einer nutartigen Führung (8) verschiebbar gehalten ist.

3. Vorrichtung nach Anspruch 1 oder 2,
dadurch gekennzeichnet,
daß das Gehäuse aus Kunststoff gebildet ist.

4. Vorrichtung nach Anspruch 3,
dadurch gekennzeichnet,
daß das Gehäuse eine metallische Gleitfläche (10) für den Lagerkörper (6) aufweist.

5. Vorrichtung nach mindestens einem der Ansprüche 1 bis 4,
dadurch gekennzeichnet,
daß an dem Gehäuse ein Absaugstutzen (19) ausgebildet ist.

## Claims

1. Device for milling grooves, false joints or the like by means of a milling disc (15) consisting of a milling disc, a back square (1) formed by a housing-shaped base (2) with an end plate (3) with an outlet opening for the milling disc (15) and a bearing body (6) for a coupling shaft (13) receiving the milling disc (15) and having a connecting journal (14) for a drive unit, wherein said bearing body is displaceably guided in the direction of the end plate (3) and can be returned by spring force, characterised in that the bearing body (6) has a toothing sector (16) extending along a circular line over an angle of at least 60°, the base (2) has linear toothing (17) cooperating with the toothing sector (16) and the bearing body (6) can be moved in the direction of the end plate (3) by rotation along the linear toothing (17), as a result of which the milling disc (15) can be adjusted.

2. Device according to claim 1, characterised in that the bearing body (6) has an annular guide surface (7) and is displaceably held in a groove-shaped guide (8).

3. Device according to claim 1 or claim 2, characterised in that the housing is formed of plastic.

4. Device according to claim 3, characterised in that the housing has a metallic sliding surface (10) for the bearing body (6).

5. Device according to at least one of claims 1 to 4, characterised in that an exhaust connection (19) is formed on the housing.

## Revendications

1. Dispositif pour fraiser des rainures, des joints d'assemblage bouveté ou similaires, au moyen d'une fraise-disque (15), constitué d'une fraise-disque, d'une équerre de butée (1) formée d'un corps de base (2) en forme de carter comportant une plaque frontale (3) avec une ouverture de sortie pour la fraise-disque (15), et d'un corps de support de palier (6) guidé de manière coulissante dans le corps de base (2) en direction de la plaque frontale (3) et soumis à un rappel par une force de ressort, le corps de support de palier (6) étant destiné à un arbre d'accouplement (13) recevant la fraise-disque (15) et présentant un tourillon de couplage (14) pour une unité d'entraînement, caractérisé en ce que le corps de support de palier (6) présente un secteur denté (16) s'étendant sur une ligne circulaire sur un angle d'au moins 60°, que le corps de base (2) possède une denture linéaire (17) coopérant avec le secteur denté (16), et que le corps de support de palier (6), par rotation, peut être déplacé le long de la denture linéaire (17), en direction de la plaque frontale (3), en permettant ainsi de réaliser la prise de passe de travail de la fraise-disque (15).

2. Dispositif selon la revendication 1, caractérisé en ce que le corps de support de palier (6) présente une surface de guidage (7) de forme annulaire, et est maintenu coulissant dans une glissière de guidage (8) en forme de rainure.

3. Dispositif selon la revendication 1 ou 2, caractérisé en ce que le carter est réalisé en matière plastique.

4. Dispositif selon la revendication 3, caractérisé en ce que le carter comporte une surface de glissement (10) métallique pour le corps de support de palier (6).

5. Dispositif selon l'une au moins des revendications 1 à 4, caractérisé en ce que sur le carter est formé un embout d'aspiration (19).
